# DEMANDE DE BREVET EUROPEEN

(11) **EP 3 876 055 A1**
(43) Date de publication de la demande: **08.09.2021**
(21) Numéro de dépôt: 21164381.2
(22) Date de dépôt: 07.12.2016
(51) Int. Cl.: G05B 19/418, G06Q 10/08

(54) **PROCEDE DE PREPARATION D'AU MOINS UNE PARTIE D'UNE COMMANDE ET SYSTEME CORRESPONDANT**

(30) Priorité: 07.12.2015 FR 1561931
(62) Demande divisionnaire de: 16813104.3
(71) Demandeur: EXOTEC, 59170 Croix (FR)
(72) Inventeur: MOULIN, Romain, 59800 LILLE (FR); HEITZ, Renaud, 59650 VILLENEUVE D'ASCQ (FR)
(74) Mandataire: Ermeneux, Bertrand

(57) **Abrégé**

L'invention concerne un procédé et un système de préparation d'au moins une partie d'une commande à l'aide d'une pluralité de contenants et d'unités mobiles motorisées.

Selon l'invention ce procédé comprend des étapes de :
- calcul, pour chacune des unités mobiles, de la distance à parcourir à partir de de la position courante de l'unité mobile jusqu'à une position prédéterminée à proximité du produit sélectionné, via la position dudit contenant sélectionné ou de la distance à parcourir à partir de la position courante de l'unité mobile jusqu'à un poste fixe de préparation de commandes ou un poste de fermeture automatique de cartons, via la position dudit contenant dans lequel un ou plusieurs produits de ladite partie de commande ont été déposés par un opérateur ;
- comparaison des distances de parcours calculées de sorte à identifier une unité mobile pour laquelle la distance de parcours est minimale.

## Description

### 1. Domaine de l'invention

Le domaine de l'invention est celui de la logistique en entrepôt et en particulier celui de la collecte et du transport de produits.

Plus précisément, l'invention concerne un procédé de préparation d'au moins une partie d'une commande et un système correspondant.

L'invention trouve une application dans l'automatisation de la gestion des flux d'un entrepôt de préparation et d'expédition de commandes.

### 2. État de la technique

Dans la chaîne logistique globale, la gestion des flux et la manipulation des produits stockés au sein d'un entrepôt jouent un rôle déterminant.

Actuellement, dans la plupart des entrepôts logistiques, des préparateurs de commandes se déplacent au sein de l'entrepôt pour collecter dans un bac ou une caisse chaque produit d'une commande en petite quantité sur des étagères de rayonnages.

Une telle organisation concourt à faire parcourir à chaque préparateur de longs trajets au cours d'une journée de travail. Par ailleurs, elle suppose que chaque préparateur ait une très bonne connaissance de l'emplacement des produits dans l'entrepôt pour ne pas perdre de temps.

Pour limiter la fatigue des préparateurs, améliorer la gestion de la collecte des produits et réduire le temps et le coût de préparation des commandes, on a pensé à affecter une zone d'un entrepôt à chaque préparateur, où il reste cantonné. Le préparateur se déplace alors dans sa zone, où il prélève une liste de produits parmi ceux des commandes en préparation, puis une fois l'ensemble des produits de sa liste collectés, il dépose les produits dans un bac ou une caisse en attente sur un convoyeur au niveau d'une gare » implantée à proximité de la zone affectée à ce préparateur. Une fois les produits de la liste déposés dans le bac ou la caisse de collecte, celui-ci est transporté par le convoyeur jusqu'à un opérateur chargé de reconstituer les commandes.

Un inconvénient de cette technique est que la mise en place de convoyeurs est coûteuse et consommatrice d'espace dans l'entrepôt. Ceci empêche notamment de doubler ou tripler le nombre de « gares » par zone pour limiter les déplacements des préparateurs.

Encore un inconvénient de cette technique est que des convoyeurs limitent le déplacement des personnels dans l'entrepôt du fait de leur emprise au sol.

On a également pensé à transporter des rayonnages disposés dans un entrepôt jusqu'à une zone de préparation de commandes à l'aide de robots. Pour cela, un robot vient se placer sous le rayonnage et le soulève pour pouvoir le transporter.

Un inconvénient de cette technique connue est que la hauteur des rayonnages doit être limitée, pour éviter leur basculement lors du transport.

### 3. Objectifs de l'invention

L'invention a donc notamment pour objectif de pallier les inconvénients de l'état de la technique cités ci-dessus.

Plus précisément, l'invention a pour objectif de fournir une technique de préparation de commandes qui limite les déplacements des préparateurs et qui permettent de gagner du temps sur une préparation d'une commande.

Un autre objectif de l'invention est de fournir une technique de préparation de commandes qui ne nécessite pas que les préparateurs connaissent l'emplacement de chaque produit dans le stock.

L'invention a également pour objectif de fournir une technique de préparation de commandes qui soit simple à mettre en œuvre et peu coûteuse.

Un autre objectif de l'invention est de fournir une technique de préparation de commandes qui puisse s'adapter aisément à une réorganisation de l'entrepôt.

Encore un objectif de l'invention est de fournir une technique de préparation de commandes qui soit sans danger pour les préparateurs évoluant dans les allées de l'entrepôt.

L'invention a également pour objectif de fournir une technique de préparation de commandes qui permette de répartir des produits identiques entre différentes commandes à cadence élevée.

### 4. Exposé de l'invention

Ces objectifs, ainsi que d'autres qui apparaîtront par la suite sont atteints à l'aide d'un procédé de préparation d'au moins une partie d'une commande à l'aide d'une pluralité de contenants et d'unités mobiles motorisées.

Selon l'invention, un tel procédé comprend les étapes suivantes :
a) sélection d'un produit de ladite partie de commande à collecter ;
b) sélection d'un contenant, de préférence le plus proche dudit produit à collecter, ledit contenant présentant un unique bac de dépose de produits monté sur une base configurée de sorte à surélever ledit bac d'au moins 60 cm, de préférence d'au moins 80 cm, ladite base comprenant des moyens de solidarisation avec lesdites unités mobiles et des moyens d'appui sur le sol ;
c) sélection d'une unité mobile comprenant une étape de calcul, pour chacune desdites unités mobiles, de la distance à parcourir à partir de sa position courante jusqu'à une position prédéterminée à proximité dudit produit commandé, via la position du contenant sélectionné et une étape de comparaison des distances calculées de parcours calculées, de sorte à identifier ladite première unité mobile pour laquelle ladite distance de parcours jusqu'à une position prédéterminée à proximité dudit produit commandé, via la position du contenant sélectionné, est minimale, que l'on sélectionne ;
d) transport dudit contenant sélectionné par ladite unité mobile sélectionnée à l'étape c) jusqu'à ladite position prédéterminée à proximité du produit commandé ;
e) notification à un préparateur de déposer un nombre n (n≥1) d'exemplaires dudit produit commandé dans la bac dudit contenant sélectionné ;
f) dépôt par un préparateur de n exemplaires dudit produit commandé dans le bac dudit contenant ;
g) dans le cas où ladite partie de commande comprend plusieurs produits différents, sélection successive des autres produits de ladite partie de commande et exécution des étapes b) à f) pour ces autres produits de ladite partie de commande.
h) sélection d'une unité mobile, comprenant une étape de calcul, pour chacune desdites unités mobiles, de la distance à parcourir à partir de sa position courante jusqu'à un poste fixe de préparation de commandes ou un poste de fermeture automatique de cartons, via la position du contenant sélectionné à l'étape b) dans lequel le ou les produits de ladite partie de commande ont été déposés, et une étape de comparaison des distances calculées de parcours jusqu'à un poste fixe de préparation de commandes ou un poste de fermeture automatique de cartons, via la position du contenant sélectionné à l'étape b), de sorte à identifier une unité mobile pour laquelle la distance de parcours jusqu'au poste de préparation de commandes ou au poste de fermeture automatique de cartons, via la position du contenant sélectionné à l'étape b), est minimale;
i) transport du contenant sélectionné par ladite unité mobile sélectionnée à l'étape h) jusqu'au poste de préparation de commandes ou au poste de fermeture automatique de carton.

La collecte des produits est ainsi automatisée, en fonction des ressources disponibles, en déplaçant les contenants à proximité des produits à collecter à l'aide des unités mobiles.

Selon un mode de réalisation avantageux de l'invention, la position prédéterminée à proximité du produit commandé est située dans une allée, entre deux rayonnages.

Ainsi, chaque contenant peut être déposé tout au long des rayonnages au plus près de l'emplacement d'emmagasinage des produits, sans se limiter à des emplacements particuliers. On réalise ainsi en d'autres termes une "gare continue".

Dans un mode de réalisation particulier de l'invention, la position prédéterminée à proximité du produit commandé est située à une extrémité d'un rayonnage.

Selon un mode de réalisation avantageux de l'invention, lors de l'étape de transport d) ou i), l'unité mobile sélectionnée circule, au moins pendant une partie de la durée de ladite étape de transport, dans une contre-allée, parallèle à une allée où est posté un préparateur de commandes, entre deux rayonnages destinés au stockage de produits.

Les unités mobiles motorisées se déplacent ainsi principalement dans des allées de circulation qui leurs sont réservées tandis que les préparateurs évoluent dans des allées pédestres. Les allées de circulation et les allées pédestres se rejoignent sur des artères de circulation partagées entre les préparateurs et les unités mobiles motorisées.

Selon un mode de réalisation particulier de l'invention, lors de l'étape de transport d) ou i), l'unité mobile sélectionnée circule, au moins pendant une partie de la durée de ladite étape de transport, sous et/ou au travers d'un rayonnage.

L'invention concerne également un système de préparation d'au moins une partie d'une commande comprenant une pluralité de contenants, lesdits contenants étant destinés à recevoir un ou plusieurs produits d'une partie de commande déposés dans celui-ci par un préparateur, et une pluralité d'unités mobiles motorisées aptes à transporter lesdits contenants.

Selon l'invention, lesdits contenants présentent un unique bac de dépose de produits monté sur une base configurée de sorte à surélever ledit bac d'au moins 60 cm, de préférence d'au moins 80 cm, ladite base comprenant des moyens de solidarisation avec lesdites unités mobiles et des moyens d'appui sur le sol, et ledit système comprend un module de gestion de flotte destiné à générer des instructions de commande du déplacement desdites unités mobiles et configuré pour :
- dans le cas où un produit de ladite partie de commande à collecter et un contenant, de préférence un contenant le plus proche de ce produit, ont été sélectionnés préalablement :
   - calculer, pour chacune des unités mobiles, la distance à parcourir à partir de de la position courante de l'unité mobile jusqu'à une position prédéterminée à proximité du produit sélectionné, via la position dudit contenant sélectionné ;

   - comparer les distances de parcours calculées de sorte à identifier une unité mobile pour laquelle la distance de parcours jusqu'à une position prédéterminée à proximité du produit sélectionné, via la position dudit contenant sélectionné, est minimale ;
- dans le cas où un ou plusieurs produits de ladite partie de commande ont été déposés par un opérateur dans un contenant préalablement :
   - calculer, pour chacune desdites unités mobiles, la distance à parcourir à partir de la position courante de l'unité mobile jusqu'à un poste fixe de préparation de commandes ou un poste de fermeture automatique de cartons, via la position dudit contenant dans lequel un ou plusieurs produits de ladite partie de commande ont été déposés par un opérateur ;
   - comparer les distances de parcours calculées de sorte à identifier une unité mobile pour laquelle la distance de parcours jusqu'au poste de préparation de commandes ou au poste de fermeture automatique de cartons, via la position dudit contenant dans lequel un ou plusieurs produits de ladite partie de commande ont été déposés par un opérateur, est minimale.

Ainsi, de façon inédite et particulièrement astucieuse, l'invention propose de transporter à l'aide de robots légers des contenants qui peuvent être déposés sur le sol à proximité des produits d'une commande à collecter, pour qu'un préparateur puisse déposer les produits dans un bac de dépose.

Le bac du contenant étant situé à la hauteur de travail du préparateur en station debout, celui-ci n'a donc pas besoin de se baisser pour poser le produit qu'il vient de prélever sur une étagère d'un rayonnage dans le bac de dépose.

Par ailleurs, le préparateur n'a pas à transporter des produits ou des bacs au cours de sa collecte puisque chaque contenant est déplacé de proche en proche à l'aide des unités mobiles motorisées jusqu'aux produits à collecter.

Selon un mode de réalisation particulier de l'invention, ladite base présente un logement configuré de sorte à permettre à une des unités mobiles de se loger sous le contenant.

Grâce à ces caractéristiques techniques, les unités mobiles peuvent se glisser dans le logement sous la base pour soulever le contenant et le transporter vers une destination. Ainsi, la préhension du contenant par une unité mobile est simplifiée.

Selon un mode de réalisation avantageux de l'invention, les moyens d'appui sur le sol comprennent au moins 2 pieds, de préférence au moins 3 pieds.

Ainsi, le contenant est stable lorsqu'il repose sur le sol.

De préférence, les pieds sont suffisamment espacés pour permettre à une unité mobile de se glisser sous la base du contenant.

Selon un mode de réalisation particulièrement avantageux de l'invention, un identifiant unique est associé à chacun des contenants et les unités mobiles comprennent chacune des moyens de lecture des identifiants.

Chaque unité mobile peut ainsi vérifier l'identifiant d'un contenant de manière autonome, avant de le prendre en charge, ce qui limite les risques d'erreurs dans le flux logistique.

Avantageusement, dans un mode de réalisation particulier de l'invention, ladite base est équipée d'au moins deux roulettes et/ou d'au moins deux patins de façon à permettre de déplacer les contenants sur le sol.

Le préparateur peut ainsi pousser ou tirer un contenant stationné à un emplacement gênant, par exemple lorsque le contenant est au pied d'un rayonnage et empêche le préparateur d'atteindre un produit sur une étagère. Il peut également déplacer le contenant sur une courte distance pour prélever plusieurs produits emmagasinés sur des étagères proches.

Dans un mode de réalisation particulier de l'invention, les unités mobiles comprennent chacune un chariot à guidage automatique présentant au moins trois roues de roulage.

Selon une caractéristique avantageuse de l'invention, un système de préparation de commandes tel que décrit ci-dessus comprend en outre au moins une réservation s'étendant jusqu'au sol, formée dans un rayonnage de stockage de produits, destinée à loger au moins un des contenants.

Ainsi, les contenants n'encombrent pas les allées de circulation.

On peut par ailleurs prévoir que les allées de l'entrepôt soient réparties entre des allées pédestres pour les préparateurs, alternées de part et d'autre des rayonnages avec des allées de circulation dédiées aux unités mobiles motorisées. Ainsi, le croisement entre les préparateurs et les unités mobiles sont limités ce qui diminue le stress subit par les préparateurs et la vigilance nécessaire.

Selon un mode de réalisation particulier de l'invention, le système de préparation de commandes comprend un poste fixe de préparation de commandes où un opérateur collecte des produits d'une commande dans les contenants transportés jusqu'au poste de préparations de commande par les unités mobiles motorisées et les place dans un colis à expédier.

Ainsi, les contenants sont livrés à un opérateur en charge de préparer l'expédition. Les tâches de transport dans l'entrepôt étant automatisées, le personnel peut se consacrer exclusivement aux tâches de cueillette des produits et de préparation des expéditions.

Selon un mode de réalisation avantageux de l'invention, au moins un des contenants est formé au moins partiellement d'un emballage en carton d'un colis à expédier.

La manipulation des produits est alors réduite, car il suffit de caler les produits dans le carton avant de le refermer et l'étiqueter pour l'expédier. Ceci permet donc de faire gagner du temps à l'opérateur et donc d'augmenter la quantité de commandes expédiées.

En outre, on peut prévoir de transférer directement en fin de collecte la partie du contenant formée du carton d'emballage vers une station de fermeture automatique de carton, qui ferme l'emballage en carton.

Selon un mode de réalisation avantageux de l'invention, un système de préparation de commandes tel que décrit ci-dessus comprend une aire de stockage temporaire d'au moins un des contenants.

Ainsi, les contenants libres ou en attente peuvent être stationnés sur une aire dédiée et ne gênent pas la circulation dans l'entrepôt.

### 5. Liste des figures

D'autres caractéristiques et avantages de l'invention apparaîtront plus clairement à la lecture de la description suivante de deux modes de réalisation de l'invention, donnés à titre de simples exemples illustratifs et non limitatifs, et des dessins annexés parmi lesquels :
- la figure 1 est une vue schématique, en perspective d'un entrepôt équipé d'un premier exemple de mode de réalisation d'un système de préparation de commandes selon l'invention ;
- la figure 2 est une représentation schématique en perspective du système de préparation de commandes illustré en référence à la figure 1 ;
- la figure 3 est une représentation schématique en perspective d'une unité mobile motorisée et d'un contenant utilisé dans l'entrepôt illustré à la figure 1 ;
- la figure 4 est représentation de l'unité mobile motorisée présentée en référence à la figure 3 transportant le contenant ;
- la figure 5 est une représentation schématique d'un système logistique d'aide à la préparation de commandes mettant en œuvre un système de préparation de commande selon l'invention;
- la figure 6 est une représentation synoptique, sous forme de schéma-bloc, des étapes d'un procédé de gestion d'un système de préparation de commande selon l'invention ;
- la figure 7 est une vue schématique, en perspective d'un entrepôt équipé d'un exemple de mode de réalisation d'un système de préparation de commandes selon l'invention ;
- la figure 8 est une autre vue de détail, en perspective, de l'entrepôt selon la figure 7 dans laquelle on peut voir une réservation dans un rayonnage permettant de stationner des contenants ;
- la figure 9 est une représentation schématique en perspective d'un autre mode de réalisation d'un système de préparation de commandes selon l'invention ;
- la figure 10 est une représentation synoptique, sous forme de schéma-bloc, des étapes d'un procédé de gestion de la préparation d'une commande lis en œuvre par le module de gestion de commandes du système présenté en référence à la figure 9 ;
- la figure 11 est une représentation synoptique, sous forme de schéma-bloc, des opérations effectuées par l'opérateur posté au poste de préparation de commandes du système de préparation de commande présenté en référence à la figure 9.

### 6. Description détaillée de l'invention

### 6.1. Exemple de mode de réalisation de l'invention

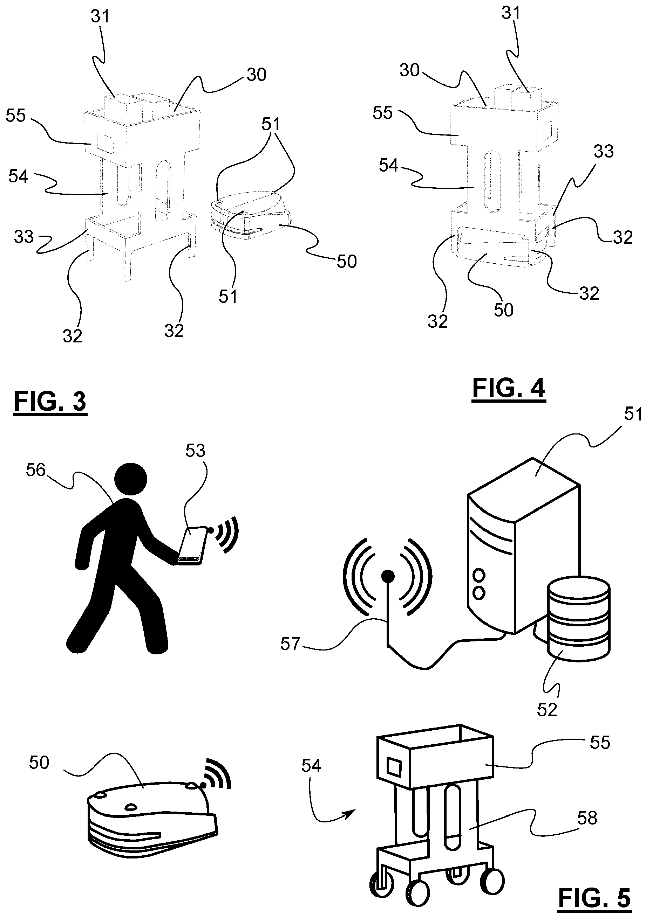

Sur la **figure 5****,** on a représenté un système logistique d'aide à la préparation de commandes 5 qui repose sur une flotte d'unités mobiles motorisées 50, constituées dans ce mode de réalisation particulier de l'invention de chariots à guidage automatique (« Automatic Guided Véhicle » en anglais), un système de gestion de flotte 51, une base de données 52, des terminaux 53, un module de gestion de la préparation des commandes (non représenté sur la figure 5) et des contenants 54 équipés chacun d'un bac 55 de dépose de produits posé sur une base 58.

Le système de gestion de flotte 51 commande chaque unité mobile 50 pour déplacer les contenants 54 en fonction des collectes à effectuer et communique avec des terminaux 53 pour coordonner l'activité de collecte des préparateurs 56.

Pour organiser une collecte, le système de gestion de flotte 51 définit une mission de transport d'un contenant entre une position de départ correspondant à sa position courante de celle-ci et une position de destination. Les missions de transport sont transmises aux unités mobiles 50 et les points de collecte aux préparateurs 56, par le système de gestion de flotte 51 qui utilise un média de communication sans fil 57 avec chaque unité mobile 50 et chaque terminal 53. Ce média de communication sans fil 57 est par exemple une communication du type WiFi, WiMAX, IWLAN, GSM, GPRS, UMTS (marques déposées).

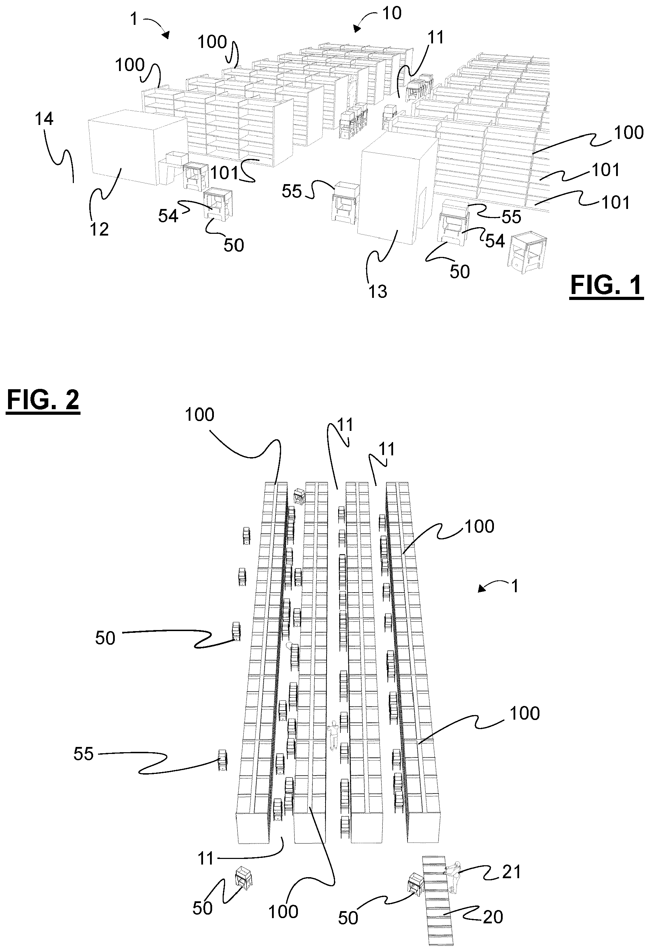

Sur la **figure 1****,** on a illustré un entrepôt 1 destiné au stockage de produits en vue de leur expédition, qui est équipé d'un système d'aide à la préparation de commandes présenté en référence à la figure 5.

Dans cet entrepôt 1, une zone de stockage 10 comprend des allées 11 de circulation, délimitées par des rayonnages 100 équipés d'étagères 101 sur plusieurs niveaux. Sur les étagères 101 sont entreposés des produits, ou articles, référencés dans la base de données de gestion du stock de l'entrepôt.

La flotte d'unités mobiles motorisées 50 assure le transport des contenants 54 dans des allées 11 de l'entrepôt 1, entre différents points de celui-ci.

L'entrepôt 1 est en outre équipé d'une « formeuse » 12, d'une « fermeuse » 13 de cartons et d'une aire 14 de stockage temporaire sur laquelle sont placés en attente des contenants 54.

Lors de la réception d'une nouvelle commande d'un ou plusieurs article(s) disponible(s) dans l'entrepôt 1, le module de gestion de commandes transmet à l'unité mobile 50 des instructions, encodées dans un message radio, lui ordonnant d'aller chercher une base 59 d'un contenant 54 ne portant pas de bac 55 dans l'aire 14 et de la transporter à la sortie du convoyeur de la formeuse 12, de sorte qu'un bac en carton dédié à cette commande, préalablement mis en forme par la formeuse, puisse être déposé sur cette base 59.

Lorsque le bac 55 est déposé sur la base 59, la formeuse 12 adresse un message de confirmation de fin de tâche au module de gestion de commande et le module de gestion de commandes ordonne au chariot 50 de transférer le contenant 54 dans l'aire de stockage temporaire 14.

Par ailleurs, un emplacement s'étend libéré à la sortie du convoyeur de sortie de la formeuse 12, celle-ci forme alors un nouveau bac 55 à partir d'une feuille de carton.

On peut voir sur la **figure 2** que l'entrepôt 1 comprend une zone de préparation 20 dans laquelle un opérateur 21 prépare un colis à expédier avec les produits d'une commande apportés par une unité mobile 50.

Pour alimenter cet opérateur 21, la collecte est organisée par le système de gestion de flotte 51, qui ordonne à des unités mobiles 50 de déplacer successivement un contenant 54 à proximité des emplacements des articles de la commande dans l'entrepôt, afin que des préparateurs 56 qui se déplacent dans les allées 11 puissent collecter chaque article sur une étagère 101 d'un rayonnage 100 et le déposer directement dans le bac 55 du contenant 54.

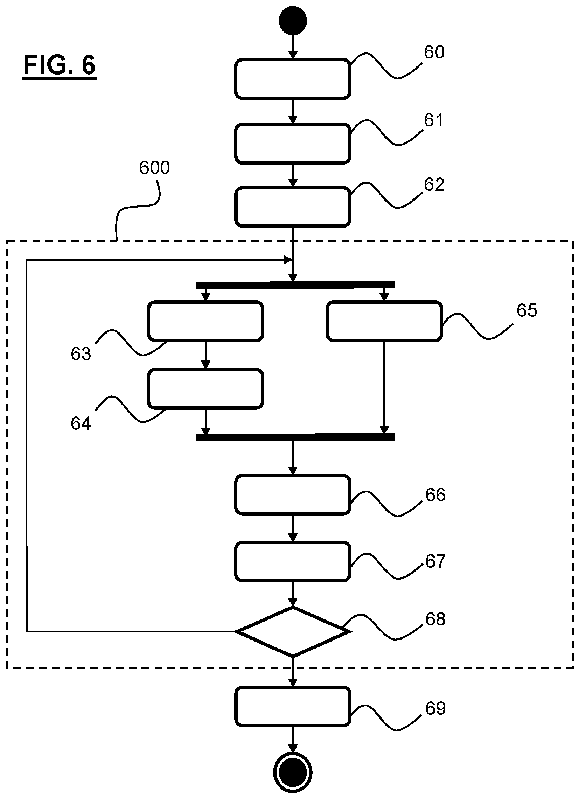

Les étapes d'un exemple de procédé de préparation d'une commande selon l'invention sont maintenant présentées en détail en référence à la **figure 6****.**

Lors de la réception d'une commande, après avoir vérifié la disponibilité de chaque article commandé, on repère dans une première étape 60 la position de chaque article disponible dans l'entrepôt, en consultant la base de données de gestion des stocks.

Ensuite, lors d'une étape 61, le système de gestion de flotte 51 choisit une stratégie de prélèvement des articles dans le stock qui consiste à définir un ordre de collecte des articles, c'est-à-dire un chemin que devra parcourir un contenant pour pouvoir y déposer successivement chaque article constitutif de la commande. Ce chemin comprend autant d'étapes de collecte, ou escales, que d'articles différents listés dans cette commande. Chaque escale correspond à un point de collecte à proximité d'une étagère 101 sur laquelle un article de la commande est stocké.

Dans une étape 62, le système de gestion de flotte 51 sélectionne un contenant libre proche du premier point de collecte.

Ensuite, le système de gestion de flotte 51 sélectionne une unité mobile motorisée 50 libre à qui il commande, dans une étape 63, d'aller chercher le contenant 54 sélectionné à l'étape 62. Pour cela, le système de gestion de flotte 51 choisit parmi les unités mobiles 50 disponibles l'unité mobile qui aura le chemin ou parcours le plus court entre sa position courante et le prochain point de collecte via la position du contenant 54 à déplacer.

Dans une étape 64, l'unité mobile 50 transporte le contenant 54 jusqu'au prochain point de collecte à proximité du ou des article(s) à prélever. Arrivé à destination, l'unité mobile 50 en informe le système de gestion de flotte 51. Elle est alors libre pour effectuer une nouvelle mission et repart en fonction des ordres transmis par le système de gestion de flotte 51.

Parallèlement, dans une étape 65, le système de gestion de flotte 51 sélectionne un préparateur 56. Avantageusement, le chemin de cueillette programmé pour ce préparateur 56 passe à proximité du point de collecte, ce qui limite ses déplacements.

Une fois que le contenant 54 est livré au point de collecte, le terminal 53 du préparateur 56 lui notifie, dans une étape 66, une nouvelle tâche de prélèvement à effectuer au point de collecte. Ainsi, une information en permanence actualisée est délivrée au préparateur 56. Lors de cette étape 66, le système de gestion de flotte 51 inscrit dans le chemin de cueillette du préparateur 56, stocké dans un terminal 53, ce nouveau point de collecte, l'article associé ainsi que la quantité à prélever.

Ensuite, le préparateur 56 lorsqu'il a atteint le point de collecte en suivant le parcours notifié complète la commande en prélevant sur l'étagère 101 la quantité d'articles planifiée sur son terminal 53 et la dépose dans le bac 55. Le préparateur 56 termine alors cette tâche de prélèvement en notifiant à l'aide de son terminal 53 la complétude de celle-ci, en informant (étape 67) le module de gestion de la préparation des commandes de la réalisation du dépôt de la quantité d'articles souhaités dans le contenant 54 cible. Puis, le préparateur 56 poursuit son chemin de cueillette vers le point de collecte planifié suivant.

Le module de gestion de préparation des commandes vérifie ensuite la complétude de la commande (étape 68).

L'ensemble des étapes 63 à 68 forme une étape 600 de collecte en une position déterminée (également appelé point de collecte) d'au moins un article de la commande.

Si pour le module de gestion de préparation des commandes, tous les articles composant la commande ont été collectés à l'étape 68, alors on enchaîne par une étape 69, sinon l'étape 600 de gestion de la collecte est réitérée avec un nouvel article de la commande qui n'a pas encore été collecté.

Enfin, à l'étape 69, le système de gestion de flotte 51 termine la préparation de la commande en ordonnant le transfert du contenant 54 dans lequel ont été déposés les articles de la commande vers un poste d'expédition, comprenant la machine fermeuse de cartons 13, pour finaliser l'emballage et préparer la livraison de la commande. Lors de cette étape, une unité mobile motorisée 50 libre est sélectionnée. Elle reçoit une instruction du système de gestion de flotte 51 d'aller chercher le contenant 54 au dernier point de collecte pour le transporter au poste d'expédition.

Il convient de noter que les emplacements de stationnement des contenants 54 ne sont pas limités. Ainsi, il est possible de pré-positionner les contenants à proximité et au plus près du lieu de prélèvement d'un produit, ce qui évite aux préparateurs 56 de transporter des produits.

La **figure 3** illustre une unité mobile motorisée 50, qui est un robot mobile léger alimenté par une batterie, capable de se déplacer de façon autonome dans l'entrepôt 1 et de transporter des charges légères. Cette unité mobile 50 reçoit des instructions de déplacement du système de gestion de flotte 51 et lui transmet des données concernant sa position, via un module de communication sans fil 57. Cette unité mobile 50 est par ailleurs apte à éviter des collisions avec des obstacles immobiles ou en mouvement, comme d'autres unités mobiles, des contenants 54 posés sur le sol, ou des préparateurs 56 qui évoluent dans les allées 11 de l'entrepôt 1.

L'unité mobile 50 comprend trois plots 51 formant un plan sensiblement parallèle au sol, destiné au port d'une charge. De préférence, ce plan est sensiblement horizontal. Il est mobile verticalement entre une position basse et une position haute de transport de la charge. Le déplacement vertical du plan pour soulever la charge est assuré par des moyens de soulèvement non représentés. Ces moyens de soulèvement verticaux sont par exemple des vérins électriques.

Sur cette figure 3, on peut voir aussi que l'unité mobile 50 est en approche d'un contenant 54. Le contenant 54 comprend un bac 55 de rangement dans lequel le préparateur 56 a facilement déposé des articles 31, grâce à une base qui rehausse le bac 55, à la hauteur de travail du préparateur 56 en station debout. Ainsi, le préparateur 56 n'a pas besoin de se pencher ou se baisser pour déposer les articles 31 dans le volume interne 30 du bac de rangement 54.

On constate également que la base du contenant 54 comprend des pieds 32 et une embase 33 surélevée par rapport au sol. Ainsi, l'unité mobile 50 qui est en position basse, peut se glisser entre les pieds 32 sous l'embase 33. Ensuite l'unité mobile 50 soulève le contenant dans la position haute de transport à l'aide des moyens de soulèvement, comme l'illustre la **figure 4****,** pour la déplacer vers une nouvelle destination en fonction des ordres ou commandes reçues du système de gestion de la flotte d'unités mobiles.

### 6.2. Autres exemples de mode de réalisation de l'invention

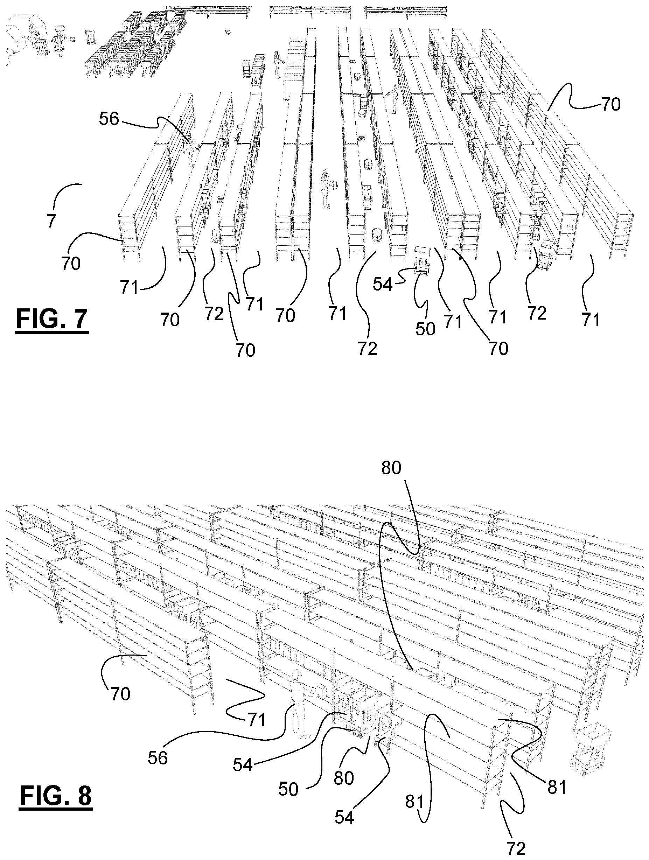

On a illustré sur la **figure 7****,** un autre exemple d'entrepôt équipé d'un système de préparation de commandes 5 selon l'invention reposant sur une flotte d'unités mobiles motorisées 50 transportant des contenants 54.

Dans ce mode de réalisation particulier de l'invention, les rayonnages 70 d'une aire de stockage 7 délimitent des allées 71 de déplacement des préparateurs 56 et des contre-allées 72, réservées au déplacement des unités mobiles 50. Ainsi, les croisements et risques de collisions entre le préparateur 56 et les unités mobiles diminuent, ce qui nécessite moins de vigilance de la part des préparateurs 56 et réduit le stress et la fatigue de ces derniers.

Pour permettre une livraison du contenant 54 à proximité du point de collecte, on a aménagé dans la partie inférieure des rayonnages 70 des réservations 80, sous les étagères 81, réparties tous les 15 à 20 mètres dans l'aire de stockage 7 de l'entrepôt

Ces réservations 80 permettent de stationner des contenants 54 à l'intérieur des rayonnages.

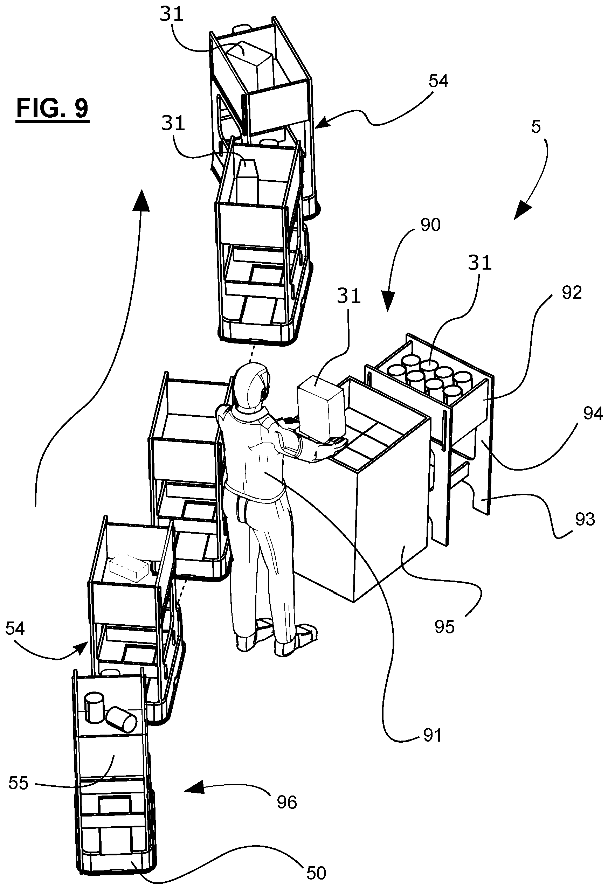

On a représenté sur la **figure 9** un poste de préparation 90 d'un système de préparation de commandes 5 selon l'invention auprès duquel sont stationnées dans une file des unités mobiles motorisées 50 transportant des contenants 54 de commandes en préparation.

L'opérateur 91 a pour tâche de répartir les articles 31 d'une même référence dans les contenants 54 qui lui sont présentés par des unités mobiles 50 stationnées en attente dans une file 96. Pour cela, il peut prélever les articles 31 sur une palette 95 dans un bac 92 placé sur une base 93.

Dans une variante, c'est un bras robotisé qui peut prélever les articles 31 sur la palette 95 ou dans le bac 92, et les déposer au fur et à mesure que les unités motorisées 50 avancent dans les bacs des contenants 54 qui se présentent à sa portée.

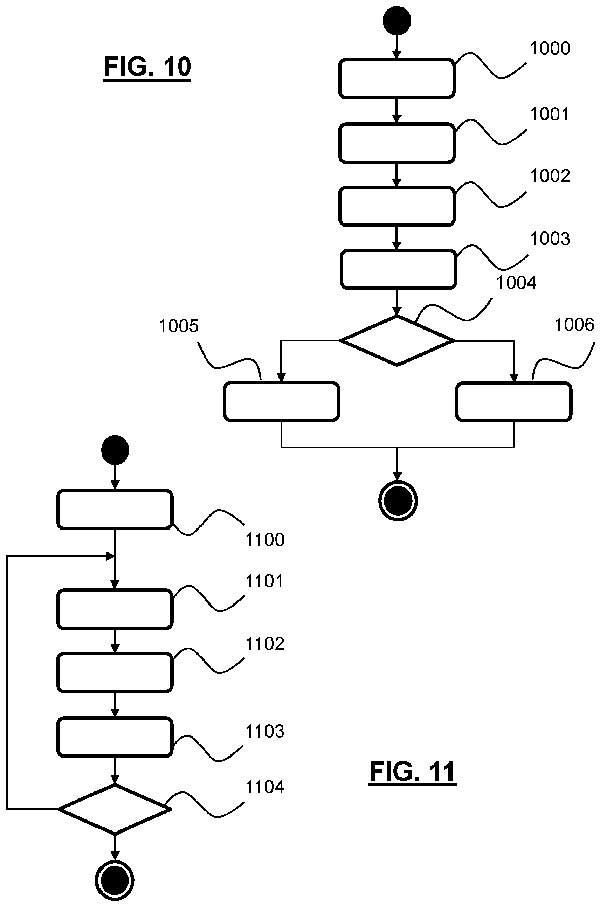

On a représenté de façon synoptique sur la **figure 10** les étapes du procédé de gestion de la préparation d'une pluralité de commandes mis en œuvre par le module de gestion de préparation de commandes du système 5 présenté en référence à la figure 9.

Dans une première étape 1000, le terminal 53 transmet au module de gestion de préparation de commandes le numéro de référence du produit 31 stocké sur la palette 95 ou sur le contenant 94, qui a été saisi au préalable par l'opérateur 91 sur le terminal 53, ou obtenu par lecture du code-barres de l'article 31 à l'aide du terminal 53.

Lorsqu'il reçoit le numéro de référence du produit 31 à répartir entre différentes commandes, le module de gestion de préparation de commandes recherche chaque commande qui doit être complétée avec le produit 31 (étape 1001).

Ensuite, lors d'une étape 1002, le module de gestion de préparation de commandes planifie pour chacune de ces commandes des instructions de transport, afin de synchroniser le déplacement des contenants 54 avec les mouvements de l'opérateur 91 aux fins de distribuer les articles 31.

Plus précisément, le module de gestion de préparation de commandes alloue à chacune des commandes dans laquelle figure le produit 31, l'identifiant de ce produit 31 ainsi que la quantité requise pour cette commande. Il ordonne ensuite, par l'intermédiaire du système de gestion de flotte, à une unité mobile 50 disponible d'aller chercher le contenant 54 correspondant à cette commande, qui est stationné en attente dans l'aire 14 de stockage temporaire, et de le transporter jusqu'à la file d'attente 96, puis de se présenter à portée de l'opérateur 91 au niveau poste de préparation 90, en suivant l'ordre d'avancée des unités mobiles 50 dans la file 96.

Puis dans une étape 1003, le module de gestion de préparation de commandes attend de recevoir, du terminal 53, un message de confirmation que la quantité d'articles 31 requise a été déposée dans le bac 93, suite à la validation de cette opération par l'opérateur 91 sur le terminal.

Lorsque la quantité d'articles 31 demandée a été ajoutée au contenant 54 et confirmée, le module de gestion de préparation de commandes vérifie (étape 1004) si la commande correspondante est complète pour passer à l'étape 1005, ou si d'autres articles 31 sont attendus et passer à l'étape 1006.

Lorsque la commande est complète, le module de gestion de préparation de commandes transmet des instructions à l'unité mobile 50 pour transport le contenant 54 jusqu'à la « fermeuse » de cartons 13 (étape 1005).

Si la commande est incomplète, alors le module de gestion de préparation de commandes ordonne à l'unité mobile 50 d'aller déposer le contenant 54 dans l'aire de stockage temporaire 14 (étape 1006).

Les différentes opérations réalisées par l'opérateur 91 au niveau du poste de préparation de commandes sont illustrées de façon synoptique sur la **figure 11****,** sous forme de diagramme.

Dans une première étape 1100, le terminal 53 demande à l'opérateur 91 d'identifier les articles 31 à répartir entre les différentes commandes en saisissant sur un clavier du terminal 53 la référence du produit, ou en lisant le code-barres de l'article 31 à l'aide du terminal 53.

A l'étape 1101, un message sur l'écran du terminal 53 demande à l'opérateur 91 d'identifier le contenant 54 que lui présente l'unité mobile 50, en lisant un code-barres inscrit sur le contenant. Le terminal 53 transmet cet identifiant au module de gestion de préparation de commandes qui lui transmet en retour, dans une étape 1102, le nombre de produits 31 à ajouter au contenant 54, afin que le terminal 53 l'affiche à l'attention de l'opérateur 91.

Ainsi, l'opérateur 91 complète chaque commande associée à un contenant 54, avec la quantité d'articles 31 affichée par le terminal 53, sur la requête du module de gestion de préparation de commandes.

Dans une étape suivante 1103, l'opérateur 91 est par le terminal a confirmer que l'opération est terminée. Le message de confirmation validé par l'opérateur est retransmis par le terminal 53 au module de gestion de préparation de commandes qui affecte de nouvelles instructions de déplacement à l'unité mobile 50 qui quitte le poste de préparation de commandes 90 avec le contenant 54.

Dans l'étape 1104 facultative, le terminal 53 interroge l'opérateur 91 pour s'assurer qu'il reste d'autres articles 31 de la même référence en stock sur la palette 95 et/ou dans le bac 92.

Si l'opérateur confirme qu'il reste des articles 31, les opérations reprennent à l'étape 1101, avec un nouveau contenant 54 d'une autre commande.

Si le stock de produits 31 sur la palette 95 et dans le bac 92 est épuisé, on apporte une palette d'un nouveau produit ou du même produit 31 et/ou un autre contenant chargé avec ce nouveau produit ou l'article 31 et l'opérateur reprend les opérations à l'étape 1100.

Dans le cas où l'étape 1104 n'est pas mise en œuvre, l'opérateur reprend à l'étape 1103 tant que le terminal ne lui indique pas que toutes les commandes devant être complétée avec le produit 31 n'ont pas été traitées. A cet effet, c'est le module de gestion de préparation de commandes qui décompte la quantité de produits prélevés sur la palette et dans le bac et la quantité résiduelle sur ceux-ci.

### 6.3. Autres caractéristiques optionnelles et avantages de l'invention

Dans des variantes des modes de réalisation de l'invention détaillés ci-dessus, il peut également être prévu de :
- mettre en œuvre une stratégie de collecte en parallèle pour augmenter la rapidité de prélèvement des articles, par exemple, en divisant l'entrepôt en zones, et en partitionnant la commande en fonction de la position des articles dans l'entrepôt. Pour chaque zone dans laquelle est entreposé au moins un article de la commande, un chemin de collecte d'un contenant est alors défini ;
- mettre en œuvre une stratégie de collecte multi-commandes par zone, dans laquelle un même contenant sert à la collecte d'articles de commandes différentes stockés dans une même zone de l'entrepôt. Ensuite, dans une zone de préparation, des opérateurs réalisent le tri et regroupent les produits d'une même commande, pour pouvoir l'expédier ;
- réaliser conjointement les étapes de sélection d'un contenant ou d'une unité mobile ;
- sélectionner un contenant 54 sur les critères suivants : le contenant qui est le plus proche d'une unité mobile libre ou qui est situé dans une zone de stationnement ;
- temporiser l'unité mobile sous la base 58 le temps que la tâche de prélèvement et de dépôt des articles dans le bac au point de collecte soit terminée ;
- fournir l'information de collecte au préparateur via une consigne vocale ;
- afficher l'information de collecte sur le contenant ;
- compartimenter le volume interne du bac du contenant pour permettre de ranger et/ou trier les produits et articles, par catégorie et/ou par commandes ;
- équiper la base du contenant de roulettes, pour permettre au préparateur de le déplacer dans l'allée pour préparer la commande, puis le placer sur une zone de transit par exemple à l'extrémité d'un rayonnage. Lorsqu'une unité mobile détecte la présence d'une unité de conditionnement dans cette zone de transit, il la prend en charge, c'est-à-dire qu'il l'identifie, la soulève et la transporte vers une nouvelle destination ;
- doter les opérateurs et/ou les préparateurs, d'un terminal permettant de lire des codes-barres et de les transmettre au module de gestion de préparation des commandes, pour permettre l'identification des produits et/ou des contenants, des bacs et des palettes ;
- identifier les contenants de commandes, les étagères et/ou les bacs de produits mono référence avec une puce RFID (acronyme de « Radio Frequency IDentification » en anglais) et équiper chaque préparateur d'un terminal doté d'une fonction de lecture d'étiquettes RFID :
   - équiper chaque unité mobile de moyens de pesée destinés à mesurer la masse d'un contenant transporté par l'unité mobile ;
   - adresser automatiquement, via l'unité mobile, un message de confirmation qu'un produit d'une commande, et plus généralement l'ensemble des produits d'une commande, a bien été déposé dans le bac d'un contenant en contrôlant la masse du contenant à l'aide des moyens de pesée précités.

## Revendications

1. Procédé de préparation d'au moins une partie d'une commande à l'aide d'une pluralité de contenants et d'unités mobiles motorisées, **caractérisé en ce qu'**il comprend les étapes suivantes :
a) sélection d'un produit de ladite partie de commande à collecter ;
b) sélection d'un contenant, de préférence le plus proche dudit produit à collecter, ledit contenant présentant un unique bac de dépose de produits monté sur une base configurée de sorte à surélever ledit bac d'au moins 60 cm, de préférence d'au moins 80 cm, ladite base comprenant des moyens de solidarisation avec lesdites unités mobiles et des moyens d'appui sur le sol ;
c) sélection d'une unité mobile comprenant une étape de calcul, pour chacune desdites unités mobiles de la distance à parcourir à partir de sa position courante jusqu'à une position prédéterminée à proximité dudit produit commandé, via la position du contenant sélectionné et une étape de comparaison des distances de parcours calculées de sorte à identifier ladite première unité mobile pour laquelle ladite distance de parcours jusqu'à une position prédéterminée à proximité dudit produit commandé, via la position du contenant sélectionné, est minimale, que l'on sélectionne ;
d) transport dudit contenant sélectionné par ladite unité mobile sélectionnée à l'étape c) jusqu'à ladite position prédéterminée à proximité du produit commandé ;
e) notification à un préparateur de déposer un nombre n (n≥1) d'exemplaires dudit produit commandé dans la bac dudit contenant sélectionné ;
f) dépôt par un préparateur de n exemplaires dudit produit commandé dans le bac dudit contenant ;
g) dans le cas où ladite partie de commande comprend plusieurs produits différents, sélection successive des autres produits de ladite partie de commande et exécution des étapes b) à f) pour ces autres produits de ladite partie de commande.
h) sélection d'une unité mobile, comprenant une étape de calcul, pour chacune desdites unités mobiles, de la distance à parcourir à partir de sa position courante jusqu'à un poste fixe de préparation de commandes ou un poste de fermeture automatique de cartons, via la position du contenant sélectionné à l'étape b) dans lequel le ou les produits de ladite partie de commande ont été déposés, et une étape de comparaison des distances de parcours calculées de sorte à identifier une unité mobile pour laquelle la distance de parcours jusqu'au poste de préparation de commandes ou au poste de fermeture automatique de cartons, via la position du contenant sélectionné à l'étape b), est minimale;
i) transport du contenant sélectionné par ladite unité mobile sélectionnée à l'étape h) jusqu'au poste de préparation de commandes ou au poste de fermeture automatique de carton.

2. Procédé de préparation d'une commande selon la revendication 1, **caractérisé en ce que** ladite position prédéterminée à proximité dudit produit commandé est située dans une allée, entre deux rayonnages.

3. Procédé de préparation d'une commande selon l'une quelconque des revendications 1 et 2 , **caractérisé en ce que** lors de ladite étape de transport d) ou i), ladite unité mobile sélectionnée circule, au moins pendant une partie de la durée de ladite étape de transport, dans une contre-allée, parallèle à une allée où est posté un préparateur de commandes, entre deux rayonnages destinés au stockage de produits.

4. Procédé de préparation d'une commande selon l'une quelconque des revendications 1 à 3, **caractérisé en ce que** lors de ladite étape de transport d) ou i), ladite unité mobile sélectionnée circule, au moins pendant une partie de la durée de ladite étape de transport, sous et/ou au travers d'un rayonnage.

5. Système de préparation d'au moins une partie d'une commande comprenant une pluralité de contenants, lesdits contenants étant destinés à recevoir un ou plusieurs produits d'une partie de commande déposés dans celui-ci par un préparateur, et une pluralité d'unités mobiles motorisées aptes à transporter lesdits contenants, **caractérisé en ce que** lesdits contenants présentent un unique bac de dépose de produits monté sur une base configurée de sorte à surélever ledit bac d'au moins 60 cm, de préférence d'au moins 80 cm, ladite base comprenant des moyens de solidarisation avec lesdites unités mobiles et des moyens d'appui sur le sol, et **en ce que** ledit système comprend un module de gestion de flotte destiné à générer des instructions de commande du déplacement desdites unités mobiles et configuré pour :
- dans le cas où un produit de ladite partie de commande à collecter et un contenant, de préférence un contenant le plus proche de ce produit, ont été sélectionnés préalablement :
- calculer, pour chacune des unités mobiles, la distance à parcourir à partir de de la position courante de l'unité mobile jusqu'à une position prédéterminée à proximité du produit sélectionné, via la position dudit contenant sélectionné ;
- comparer les distances de parcours calculées de sorte à identifier une unité mobile pour laquelle la distance de parcours jusqu'à une position prédéterminée à proximité du produit sélectionné, via la position dudit contenant sélectionné, est minimale ;
- dans le cas où un ou plusieurs produits de ladite partie de commande ont été déposés par un opérateur dans un contenant préalablement :
- calculer, pour chacune desdites unités mobiles, la distance à parcourir à partir de la position courante de l'unité mobile jusqu'à un poste fixe de préparation de commandes ou un poste de fermeture automatique de cartons, via la position dudit contenant dans lequel un ou plusieurs produits de ladite partie de commande ont été déposés par un opérateur ;
- comparer les distances de parcours calculées de sorte à identifier une unité mobile pour laquelle la distance de parcours jusqu'au poste de préparation de commandes ou au poste de fermeture automatique de cartons, via la position dudit contenant dans lequel un ou plusieurs produits de ladite partie de commande ont été déposés par un opérateur, est minimale.

6. Système de préparation de commandes selon la revendication 5, **caractérisé en ce que** ladite base présente un logement configuré de sorte à permettre à une desdits unités mobiles de se loger sous ledit contenant.

7. Système de préparation de commandes selon l'une quelconque des revendications 5 et 6, **caractérisé en ce que** lesdits moyens d'appui sur le sol comprennent au moins 2 pieds, de préférence au moins 3 pieds.

8. Système de préparation de commandes selon l'une quelconque des revendications 5 à 7, **caractérisé en ce qu'**un identifiant unique est associé à chacun desdits contenants et **en ce que** lesdites unités mobiles comprennent chacune des moyens de lecture desdits identifiants

9. Système de préparation de commandes selon l'une quelconque des revendications 5 à 8, **caractérisé en ce que** ladite base est équipée d'au moins deux roulettes et/ou d'au moins deux patins de façon à permettre de déplacer lesdits contenants sur le sol.

10. Système de préparation de commandes selon l'une quelconque des revendications 5 à 9, **caractérisé en ce que** lesdites unités mobiles comprennent chacune un chariot à guidage automatique présentant au moins trois roues de roulage.

11. Système de préparation de commandes selon l'une quelconque des revendications 5 à 10, **caractérisé en ce qu'**il comprend en outre au moins une réservation s'étendant jusqu'au sol, formée dans un rayonnage de stockage de produits, destinée à loger au moins un desdits contenants.

12. Système de préparation de commandes selon l'une quelconque des revendications 5 à 11, **caractérisé en ce qu'**il comprend un poste fixe de préparation de commandes où un opérateur collecte des produits d'une commande dans lesdits contenants transportés jusqu'audit poste de préparation de commande par lesdites unités mobiles motorisées et les place dans un colis à expédier.

13. Système de préparation de commandes selon l'une quelconque des revendications 5 à 12, **caractérisé en ce qu'**au moins un desdits contenants est formé au moins partiellement d'un emballage en carton d'un colis à expédier.

14. Système de préparation de commandes selon l'une quelconque des revendications 5 à 13, **caractérisé en ce qu'**il comprend une aire de stockage temporaire d'au moins un desdits contenants.
